# EUROPÄISCHE PATENTANMELDUNG

(11) **EP 1 210 853 A1**
(43) Veröffentlichungstag der Anmeldung: **05.06.2002**
(21) Anmeldenummer: 01128063.3
(22) Anmeldetag: 26.11.2001
(51) Int. Cl.: A01B 45/02

(54) **Bodenbearbeitungsgerät**

(30) Priorität: 25.11.2000 DE 10058713
(71) Anmelder: Wiedenmann GmbH, 89192 Rammingen (DE)
(72) Erfinder:
(74) Vertreter: Flügel, Otto, Dipl.-Ing.

(57) **Zusammenfassung**

Über eine Bodenfläche verfahrbar geführtes Bodenbearbeitungsgerät (1) mit im wesentlichen in einer Stoßrichtung angetrieben (4, 5) in den Boden einführbaren Einstechwerkzeugen (6) unter Durchstoßung der Bodenfläche, insbesondere Grasnabe, und Schaffung von Bodenöffnungen innerhalb des zu verarbeitenden Bodens, das zum Zwecke erweiterter Verwendung unter Einsatz zusätzlicher Bodenbearbeitungseinrichtungen sich durch wenigstens eine in Fahrtrichtung mitgeführte Nach- und/oder Parallelbehandlungseinrichtung (7; 8; 10; 12; 15; 20; 21; 24) für die Bodenöffnungen und/oder deren Durchstoßbehandlungen und/oder die Weiterbehandlung ausgeworfenen Bodens und/oder die Behandlung der Bodenfläche im Umfeld der Einstechöffnungen auszeichnet.

## Beschreibung

Ausgangsbasis der Erfindung ist ein Bodenbearbeitungsgerät mit im wesentlichen in einer Stoßrichtung in den Boden einführbaren Einstechwerkzeugen (Spoons) unter Durchstoßung der Oberfläche, beispielsweise Grasnabe, des zu bearbeitenden Bodens. Bei bekannten Geräten dieser Art - beispielsweise EP 0 452 449 und WO98/05191 - wird eine Bodenauflockerung vornehmlich mit dem Ziel einer Drainierung erreicht, die sich dadurch auszeichnet, dass die Einstechöffnung des einzelnen Werkzeuges in der Oberfläche bzw. Grasnabe kleiner ist als der in die Tiefe gesehen geschaffene Bodenhohlraum. Wie in den vorgenannten Veröffentlichungen, auf die besonders Bezug genommen wird, dargelegt ist, werden die Einstechwerkzeuge an chassisfest verschwenkbar gelagerten Armen gehalten, die durch einen motorgetriebenen Kurbeltrieb in auf- und abgehende Verschwenkbewegungen versetzt werden. Dabei sind in der Regel mehrere solcher an ihren freien Enden Stechwerkzeuge tragende Arme vorgesehen, deren jeder mehrere Einstechwerkzeuge aufweisen kann. Diese Einstechwerkzeuge können unterschiedliche Längen und Durchmesser aufweisen und sind von daher regelmäßig auswechselbar. Solche Bodenbearbeitungen sind insbesondere bei Sportflächen, vornehmlich Golfplätzen, bedeutsam, bei denen die Oberfläche - Grasnabe - durch die Bearbeitung möglichst wenig "gestört" werden soll. Andere Bodenauflockerungsgeräte etc. arbeiten mit Stachelwalzen, bei denen die durch die Stachel verursachten Eindringöffnungen in die Oberfläche/Grasnabe des bearbeiteten Bodens größer sind als die Öffnungsweite in Richtung der Bodentiefe gesehen.

Mit der vorliegenden Erfindung soll diese besondere Qualität der Einstechöffnungen der Einstechwerkzeuge der eingangs genannten Geräte unter zusätzlicher Verwendung weiterer Bodenbearbeitungseinrichtungen nutzbringend erweitert werden, sei es zur Unterstützung der Bodenauflockerung und/oder zusätzlicher und/oder anderer Bearbeitungen, die sich der Arbeitsweise dieser Geräte bedient.

Die erfindungsgemäß einzeln oder in Kombinationen vorgesehenen weiteren Bodenbearbeitungseinrichtungen sind an das Bodenbearbeitungsgerät vorgeschilderter Art angeschlossen, und zwar an dessen Chassis fest oder zu diesem als Nachlaufgeräte insoweit angehängt.

Eine erste Gruppe von Bodenbearbeitungseinrichtungen dieser Art sind solche, die sich zwischen der bodenseitigen Abstützung des Chassis (Rahmens) des Bodenbearbeitungsgerätes und dessen Einstechwerkzeugen in Vorwärtsfahrtrichtung gesehen befinden. Es handelt sich dabei vornehmlich um Einrichtungen zur Aufrauung, Moos- Rasenfilzentfernung und dergleichen geeignete "Kratzwerkzeuge", sogenannte Striegel, gegen den Boden insbesondere federnd andrückende Bodenniederhalter zur Verhinderung von Ausfransungen der Einstechöffnungen der Einstechwerkzeuge bei Entfernen aus dem Boden und ähnliches. Beispielhafte Ausbildungen ergeben sich aus den beiliegenden Zeichnungen und deren Beschreibung.

In ähnlicher Weise dem Ergebnis der Bodendurchlüftung dienlich ist die Verwendung eines Sammelschildes - Auffangwanne - für die Aufnahme von Erdkegeln, die im Zuge des Einstechvorganges von als Hohlspoons (rohrförmig) ausgebildeten Einstechwerkzeugen aus dem Erdreich ausgestochen und bei Herausziehen ausgeworfen werden. Das Sammelschild ist dabei an einem Hilfsrahmen gehalten. Dieser kann an dem Chassis des Bodenbearbeitungsgerätes in vertikaler und parallel zur Vorwärtsfahrtrichtung verlaufender Ebene verschwenkbar gelagert sein und sich dabei über eine Nachlaufwalze an dem zu bearbeitenden Boden abstützen. Die Nachlaufwalze, die wie das Sammelschild in Vorwärtsfahrtrichtung gesehen auf die Einstechwerkzeuge folgend angeordnet sind, hat den Vorteil, dass die Berandungen der Einstechöffnungen im Boden geglättet werden. Das Sammelschild ist dabei insbesondere zwischen dem Einstechwerkzeugen und der Bodenwalze angeordnet und kann über eine gesonderte, in gleicher Ebene verschwenkbare Halterung an dem Hilfsrahmen angelenkt und am Boden abgestützt geführt sein; dies geschieht gegebenenfalls unter Federbelastung. Darüber hinaus kann mittels einer chassisfesten Schürze Erdkegelauswurf in das Sammelschild abgeleitet werden.

Eine weitere Verwendungsvariante betrifft eine Bürstenwalze, die ähnlich wie das Sammelschild an einem Hilfsrahmen gehalten ist und sich über eine Nachlaufwalze höhenveränderlich an dem Boden abstützt; höhenveränderlich dadurch, dass der Hilfsrahmen an dem Chassis des Gerätes in vertikaler und in Vorwärtsfahrtrichtung verlaufender Ebene verschwenkbar gelagert ist. Die Bürste kann über eine Hebelanordnung gegenüber der am Boden angreifenden Nachlaufwalze hinsichtlich ihres Abstandes vom Boden eingestellt werden, beispielsweise mittels einer Verstellspindel. Der Antrieb der Bürste könnte grundsätzlich von der Fahrbewegung (Nachlaufwalze) abgeleitet sein, erfolgt aber vorzugsweise über einen hydraulischen Antrieb, der von dem Zugfahrzeug des Bodenbearbeitungsgerätes gespeist sein kann. Die Bürstenwalze wird vorzugsweise hinsichtlich ihres Bodenangriffes der Vorwärtsfahrtrichtung des Gerätes entgegengesetzt rotierend angetrieben. Mit der Bürste, die in Vorwärtsfahrtrichtung auf die Einstechwerkzeuge nachfolgend und insbesondere zwischen diesen und der Nachlaufwalze angeordnet ist, lässt sich Sand oder auch Saatgut in die durch die Einstechwerkzeuge geschaffenen Bodenöffnungen einspeisen. Die Zugabe entsprechenden Sandes oder Saatgutes kann dabei in Vorwärtsfahrtrichtung vor oder hinter den Einstechwerkzeugen erfolgen.

In weiterer Verwendung kann das Bodenbearbeitungsgerät eine Nachsaateinrichtung tragen, die vorzugsweise höhenversetzbar an einem Hilfsrahmen gehalten ist, der vorzugsweise in vertikaler und in Vorwärtsfahrtrichtung verlaufender Ebene verschwenkbar an dem Chassis des Bodenbearbeitungsgerätes angelenkt und über eine Trag- und Anpresswalze an den zu bearbeitenden Boden abgestützt ist. Dabei kann die Nachsaateinrichtung einen Saatgutbehälter umfassen, der an dem Hilfsrahmen gehalten zwischen den Einstechwerkzeugen und der Trag- und Anpresswalze angeordnet ist und der vorzugsweise mit einer Ausbringeinrichtung ausgerüstet ist. Diese letztere kann rotatorisch angetrieben sein, insbesondere durch eine getriebliche Verbindung zur Trag- und Anpresswalze, so dass im Zuge der Fahrtbewegung der Drehantrieb der Ausbringeinrichtung erfolgt. Dem Saatgutbehälter kann eine Bürste zugeordnet sein - in Anordnung zwischen dem Saatgutbehälter und der Trag- und Anpresswalze - die das dem Saatgutbehälter entrinnende Saatgut in die durch die Einstechwerkzeuge geschaffenen Bodenöffnungen einbringt. Diese Bürste ist gegenüber dem Saatgutbehälter vorzugsweise durch eine Parallelogrammlenkeranordnung in ihrer Versetzbewegung vorzugsweise senkrecht zum Boden gleichbleibend ausgerichtet geführt. Die Bürste wird daher insoweit unabhängig von dem Hilfsrahmen unmittelbar durch ihre Bodenberührung hinsichtlich ihrer Bewegung diesem gegenüber gesteuert, so dass ein besonders gleichmäßiger, der Saatguteinbringung dienlicher Beseneffekt erreicht wird.

Diese Form der Saatguteingabe kann grundsätzlich bei allen Bodenbelüftungsvorgängen und den damit gezielt angepasst ausgebildeten Einstechwerkzeugen vorgenommen werden. In besonderer Ausbildung kann jedoch ein Einstechwerkzeugsatz verwendet werden, der weniger der Bodenbelüftung, sondern vornehmlich der Schaffung von entsprechend dichten, weniger tiefen etc. Bodenöffnungen dient, die das Saatgut in über den Boden gesehen dichter Verteilung aufnehmen. In diesem Falle wird anstelle eines herkömmlichen Einstechwerkzeuges oder Einstechwerkzeugsatzes pro Arm ein Vielfachzinkenträger mit einer Vielzahl von kurzen, dünneren Zinken eingesetzt.

Eine abgewandelte Form der Nachsaateinrichtung umfasst einen Saatgutbehälter, der gegenüber einem an das Chassis des Bodenbearbeitungsgerätes angeschlossenen Hilfsrahmen über eine Parallelogrammlenkereinrichtung entsprechend zum Boden hin ausgerichtet richtungsstabil versetzbar verbunden ist. Der Saatgutbehälter ist über eine entsprechende Baueinheit mit einer nachlaufenden weichen Bürste zum Einstreichen des Saatgutes in die von den Stechwerkzeugen (Vielfachzinkenträger) geschaffene Vielzahl von Bodenöffnungen versehen, welche Baueinheit mittels einer Nachlaufwalze bodenorientiert abgestützt ist. Auch bei dieser Anordnung befindet sich der Saatgutbehälter gefolgt von der Bürste in Vorwärtsfahrtrichtung gesehen zwischen den Einstechwerkzeugen und der Trag- und Anpresswalze. Letztere kann als sogenannte Luftwalze für das Andrücken des Saatgutes unter Bodenabschluss ausgebildet sein, d.h. es handelt sich um eine dichte Aufeinanderfolge von luftbereiften Rädern koaxial und senkrecht zur Vorwärtsfahrtrichtung angeordnet.

Die vorgeschilderten, im Zuge der jeweiligen Verwendung des Bodenbearbeitungsgerätes vorgesehenen Einrichtungen von Striegeln zur Aufbereitung des Bodens und/oder der Niederhaltereinrichtung jeweils in Vorwärtsfahrtrichtung vor den Einstechwerkzeugen, eines Sammelschildes für ausgehobene Erdkegel nebst Nachlaufwalze, einer Bürstenwalze für das Einbringen von Sand und/oder Saatgut in frisch geschaffene Einstechöffnungen einer Nachsaateinrichtung in unterschiedlicher Ausbildung nebst Bürste und nachlaufender Trag- und Anpresswalze können in Kombination und vielfältigen Teilabwandlungen zusammengesetzt werden.

Die vorerwähnten Verwendungskomplexe sind anhand von Ausführungsbeispielen in den anliegenden Zeichnungen erläutert, ohne damit hinsichtlich ihrer Kombinationsfähigkeit erschöpfend abgehandelt zu sein. Es zeigen:
- Figur 1: eine schematische, hinsichtlich der Teile auf wesentliches beschränkte Prinzipseitenansicht unter Weglassen der seitlichen Abdeckungen etc. eines ersten Ausführungsbeispieles mit andeutungsweiser Wiedergabe einer Striegel- und/oder Niederhaltereinrichtung sowie Sammelschild für Erdkegelauswurf in Nachlaufstellung zu den Einstechwerkzeugen;
- Figur 1a und 1b: modifizierte Ausführungsformen des Beispieles gemäß Figur 1;
- Figur 2: eine Seitenansicht nach der Vorstellung gemäß Figur 1 mit einer höhenverstellbaren Bürstenwalze in Nachlaufstellung zu den Einstechwerkzeugen;

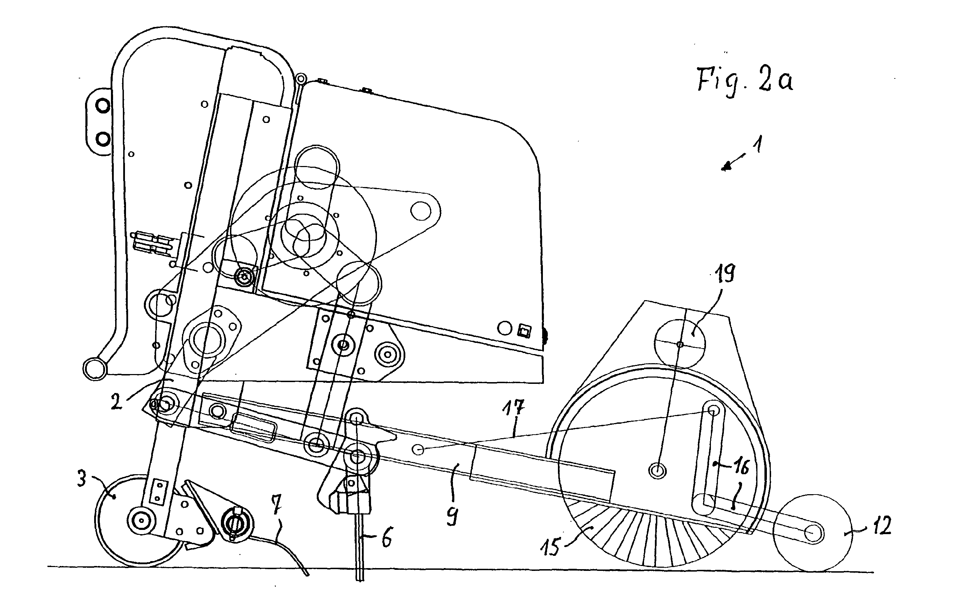

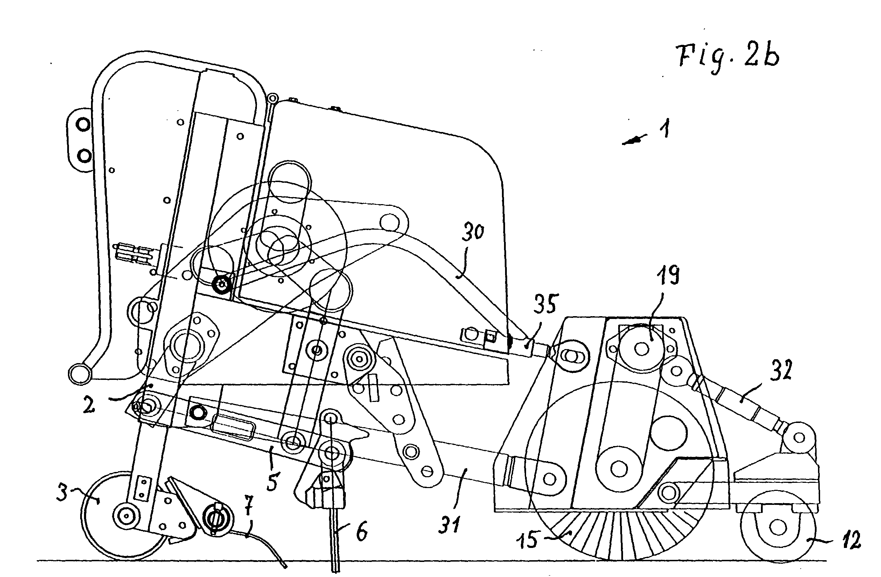

- Figur 2 a und 2b: modifizierte Ausführungen des Beispieles gemäß Figur 2;

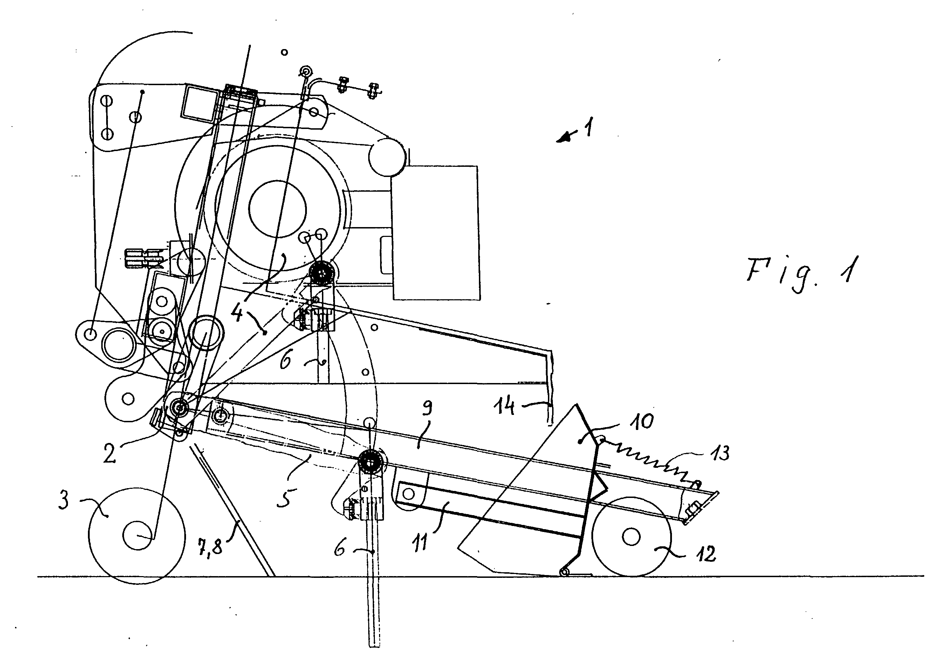

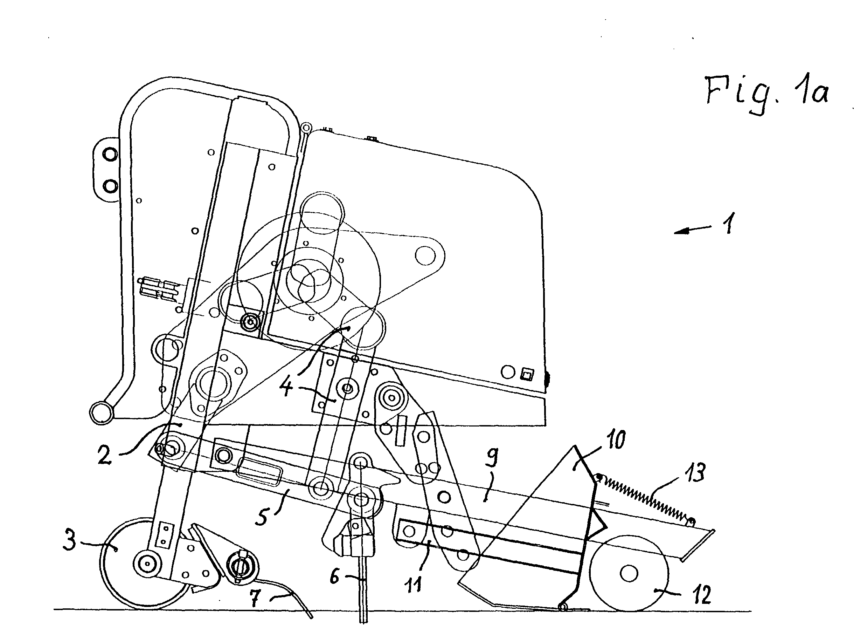

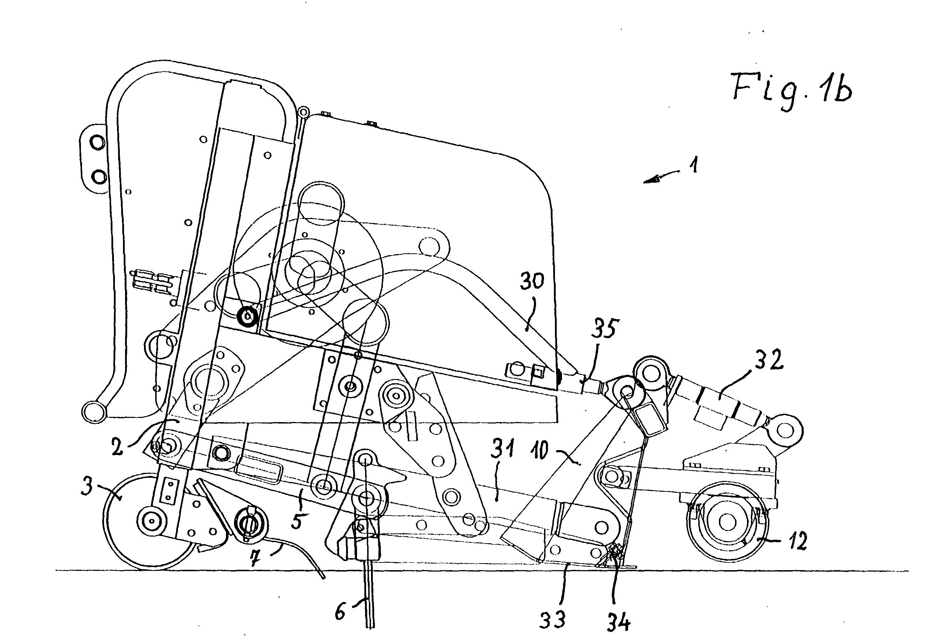

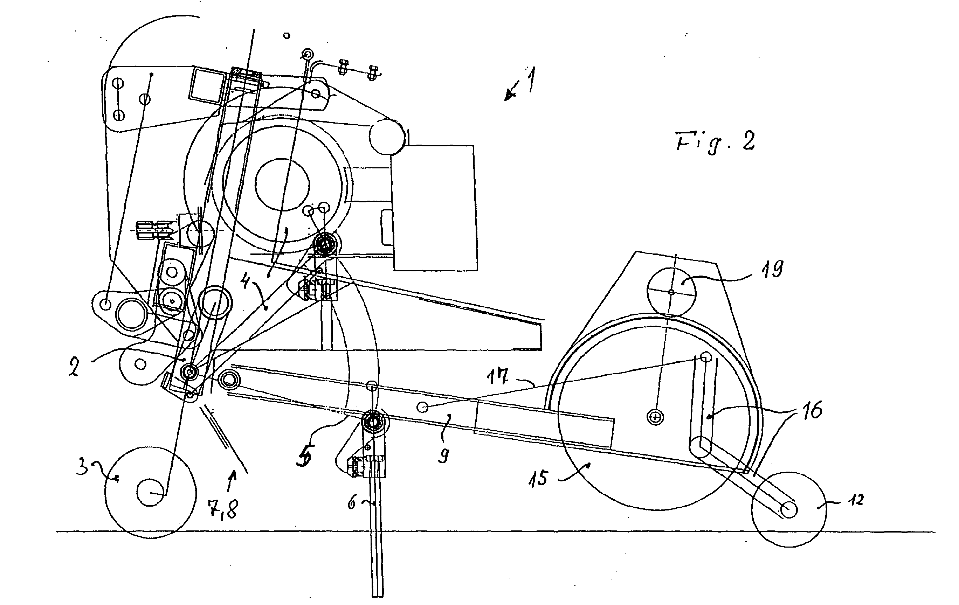

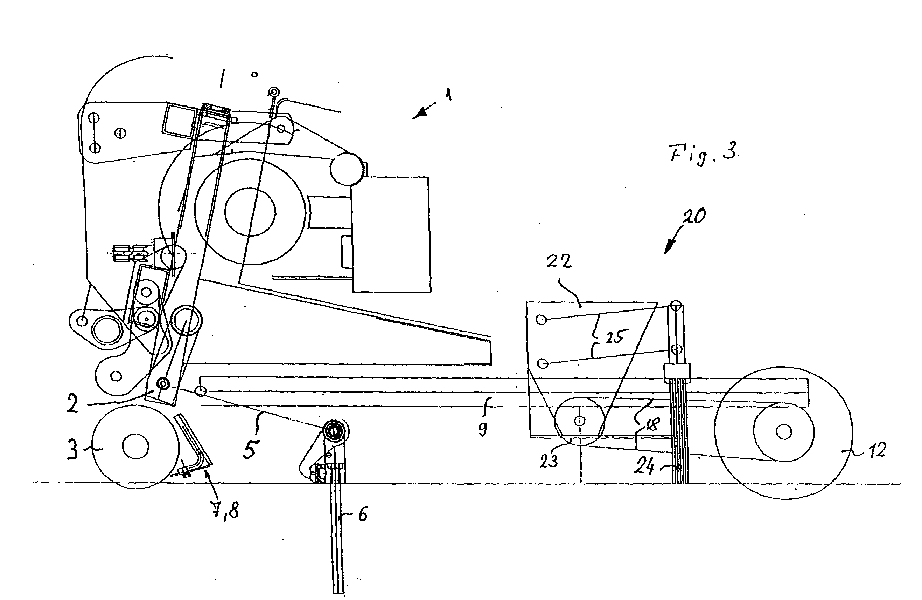

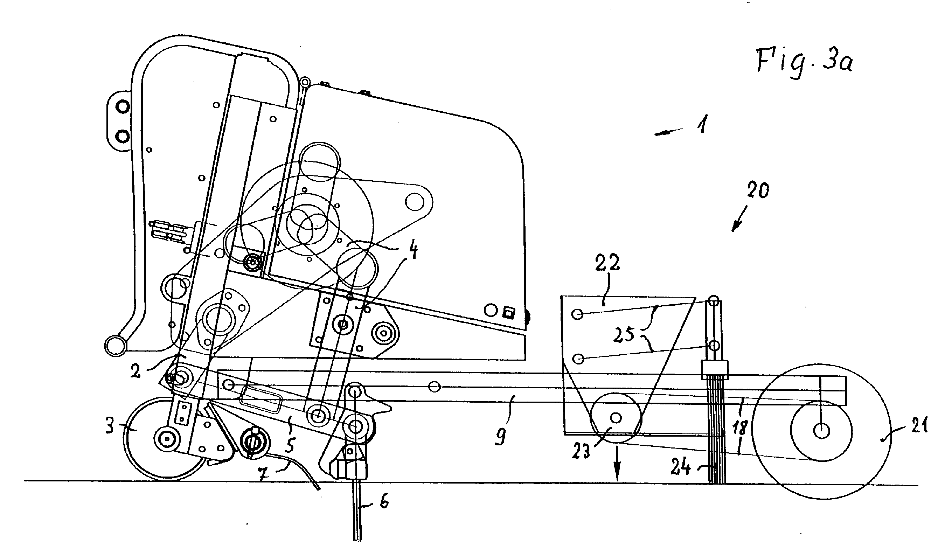

- Figur 3: eine Seitenansicht nach der Vorstellung gemäß Figur 1 mit einer Nachsaateinrichtung an einem Hilfsrahmen in Nachlaufstellung zu den Einstechwerkzeugen;
- Figur 3a: eine modifizierte und teilgenauere Wiedergabe des Beispieles gemäß Figur 3;

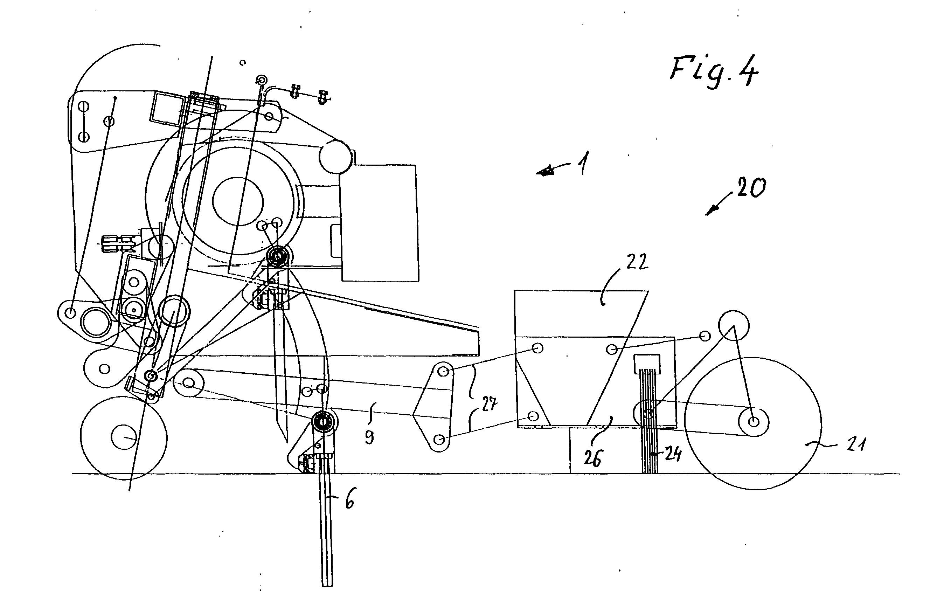

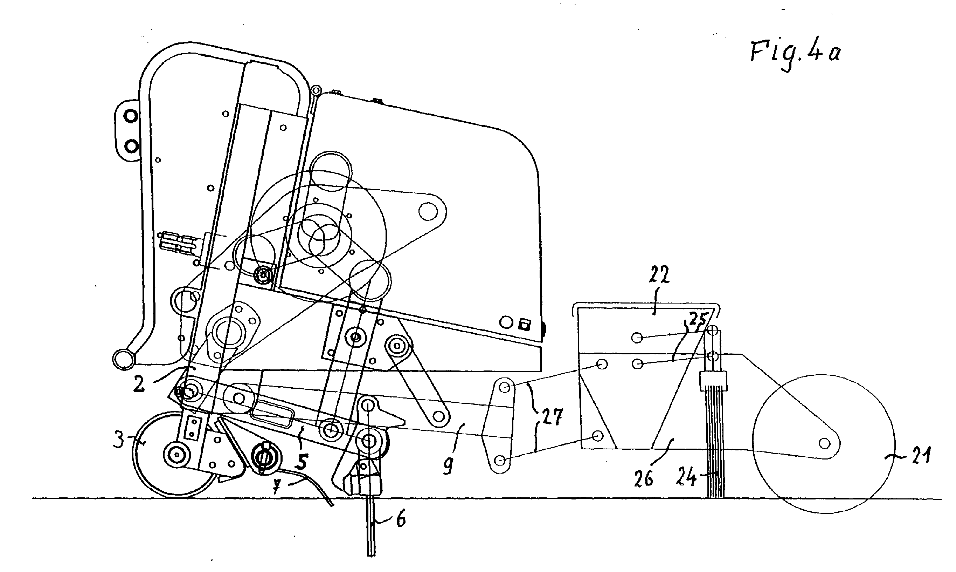

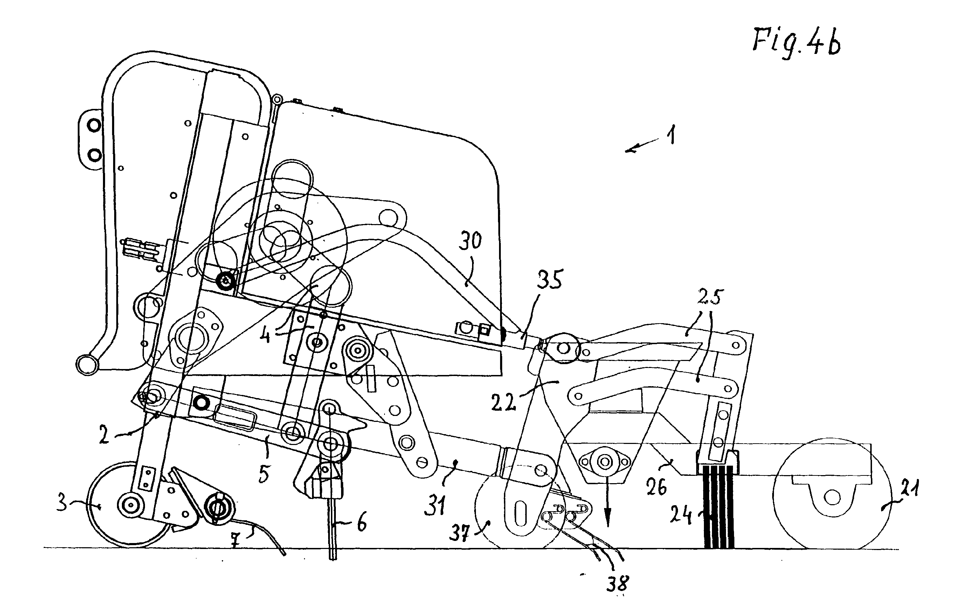

- Figur 4: eine Seitenansicht nach der Vorstellung gemäß Figur 1 mit einer gegenüber Figur 3 abgewandelten Nachsaateinrichtung
- Figuren 4a und 4b: modifizierte Wiedergaben des Beispieles gemäß Figur 4;

Sämtliche Figuren beruhen auf einem Bodenbearbeitungsgerät der eingangs genannten Art als Ausgang für die je nach Verwendung unterschiedlich an diesem Grundgerät angeordneten Bodenbearbeitungseinrichtungen. Das Bodenbearbeitungsgerät ist insgesamt mit 1 bezeichnet, weist ein Chassis 2 auf, das in nicht weiter dargestellter Weise mit einem Zugfahrzeug vornehmlich über eine sogenannte Dreipunktaufhängung verbunden ist und das sich mit einer Stützwalze 3 gegenüber dem Boden abstützt. An dem Chassis 2 ist ein insgesamt mit 4 bezeichneter Kurbeltrieb gehalten, der über eine Zapfwelle von dem nicht dargestellten Zugfahrzeug aus derart angetrieben wird, dass die an dem Chassis 2 verschwenkbar angelenkten Arme 5 von jeweils von einer Kurbelstange des Kurbeltriebes 4 in einer vertikalen, in Fahrtrichtung verlaufenden Ebene auf- und abgehend angetrieben sind. Jeweils am freien Ende dieser Arme sind Einstechwerkzeuge 6 gehalten, die in dem befahrenen Boden unter einem vorgegebenen Winkel einstechen, so dass sich Drainageöffnungen und dergleichen Bodenauflockerungen ergeben. Im übrigen wird auf die eingangs genannten Druckschriften verwiesen, in denen diese Bodenbearbeitungsgeräte im Einzelnen geschildert sind. Für die nachfolgend geschilderten Verwendungsausbildungen sind die einzelnen Ausgestaltungsmerkmale dieser als Ausgangspunkt dienenden Bodenbearbeitungsgeräte insoweit nicht von entscheidender Bedeutung.

Die Figuren 1, 2 und 3 zeigen insoweit andeutungsweise zwischen der Stützwalze 3 und den Einstechwerkzeugen 6 angeordnete Bodenbearbeitungseinrichtungen 7 und 8, die in hier nicht näher dargestellter Ausbildung als Striegel 7 für die Aufrauung des Bodens - Moos- und/oder Grasfilzentfernung - oder als vorzugsweise federnd auf die Bodenoberfläche - Grasnabe - drückende Bodenniederhalter 8 oder dergleichen ausgebildet sind, letztere derart angeordnet, dass sie zwischen die in den Boden einstechenden Werkzeuge eingreifen, um bei Herausziehen der Einstechwerkzeuge ein Ausfransen der Einstechlöcher des Bodens möglichst zu verhindern.

Figur 1 zeigt über die angedeuteten Bearbeitungseinrichtungen 7 und 8 hinausgehend ein an einem Hilfsrahmen 9 angeordnetes Räumschild 10, das in Fahrtrichtung geöffnet ist und das der Aufnahme von Erdkegeln dient, die bei hohl ausgebildeten Einstechwerkzeugen 6 bei deren Rückzug aus dem Boden anfallen und - gegebenenfalls durch entsprechend orientierte seitliche Öffnungen des rohrförmigen Werkzeuges - in Fahrtrichtung nach hinten ausgeworfen werden. Der Verbesserung des Aufnahmeeffektes kann eine Schürze 14 dienen, die chassisfest angeordnet ist. Das Räumschild 10 selbst - an dessen Stelle auch eine Auffangwanne vorgesehen sein kann, - ist gegenüber dem an dem Chassis 2 des Bodenbearbeitungsgerätes 1 angeordneten Hilfsrahmen 9 wiederum über Schwenkhalterungen 11 in vertikaler und in Fahrtrichtung verlaufender Ebene verschwenkbar gehalten, und zwar vorzugsweise mittels einer Federeinrichtung 13 stabilisiert. Der Hilfsrahmen 9 ist in direkter Anordnung über eine Nachlaufwalze 12 an dem zu bearbeitenden Boden abgestützt.

Figur 1a zeigt in praktisch gleicher Arbeitsweise wie das Beispiel gemäß Figur 1 eine modifizierte, detailgetreuere Ausführung, bei der die hinter der Stützwalze angeordneten Bodenniederhalter 8 sowie die Schürze 14 weggelassen sind.

Figur 1b zeigt ein praktisches Ausführungsbeispiel des vom Arbeitsprinzip her gleichwirkenden Beispieles nach den Figuren 1 und 1a mit der Maßgabe, dass das Räumschild 10 über ein Oberlenker Parallelogramm 30 und ein Unterlenker Parallelogramm 31 anstelle des Hilfsrahmens 9 entsprechend höhenveränderlich an dem Chassis gehalten ist, während die Nachlaufwalze 12 über einen verstellbaren Oberlenker 32 an das Räumschild angeschlossen ist. Ein weiterer verstellbarer Oberlenker 35 dient der Justierung. Das Räumschild greift über seitliche Gleitkufen an dem Boden an, und eine aus gummielastischen Werkstoff bestehende Schürfleiste zum Boden hin gerichtet dient der besseren Aufnahme der Erdkegel. Über den verstellbaren Oberlenker 32 lässt sich der Anpassungsdruck der Schürfleiste regeln, in dem die Nachlaufwalze 12 über den Oberlenker 32 angehoben wird. In anderer Einstellung des Oberlenkers stützt sich die Nachlaufwalze 12 derart an dem Boden ab, dass das dadurch angehobene Räumschild außer Betrieb genommen werden kann.

In Figur 2 ist - neben den zwischen der Stützwalze 3 und den Einstechwerkzeugen 6 angeordneten Bearbeitungseinrichtungen 7, 8 Striegel und/oder Bodenniederhalter - hinsichtlich der Einstechwerkzeuge 6 nachfolgend eine Bürstenwalze vorgesehen, die an einem mit dem Chassis 2 in vertikaler Ebene verschwenkbar verbundenen Hilfsrahmen 9 gehalten ist, welcher Hilfsrahmen 9 sich in direkter Aufnahme einer Nachlaufwalze 12 sich über am Boden abstützt. Über eine Hebelanordnung 16 lässt sich der Hilfsrahmen 9 gegenüber der Nachlaufwalze 12 höhenverstellen - hier angedeutet mit Hilfe einer Verstellspindel 17 -, so dass der Angriff der Bürstenwalze 15 an dem zu bearbeitendem Boden bestimmt werden kann. Die Bürstenwalze 15 könnte grundsätzlich über eine getriebliche Verbindung wie Riementrieb von der Nachlaufwalze 12 ausgehend angetrieben werden, im Ausführungsbeispiel ist dazu ein hydraulischer Antrieb 19 vorgesehen, wobei die Bürstenwalze bevorzugt hinsichtlich ihres Angriffes an dem zu bearbeitenden Boden entgegen der Vorwärtsfahrtrichtung angetrieben ist. Die Bürstenwalze glättet den Boden nach Eingriff der Einstechwerkzeuge und kann der Einbringung von Füllgut (Sand) und/oder Saatgut in den Boden und in die Einstechöffnungen dienen; entsprechende Zuführungen von Sand und/oder Saatgut sind dann in Fahrtrichtung gesehen zwischen den Einstechwerkzeugen 6 und der Bürstenwalze 15 vorzusehen.

Figur 2a zeigt in praktisch gleicher Arbeitsweise wie das Beispiel gemäß Figur 2 eine modifizierte, detailgetreuere Ausführung, bei der die hinter der Stützwalze angeordneten Bodenniederhalter 8 weggelassen sind.

Figur 2b zeigt ein praktisches Ausführungsbeispiel gleichwirkender Arbeitsweise wie die Beispiele nach den Figuren 2 und 2a, jedoch anstelle der direkten Anhängung der Nachlaufwalze an einem Hilfsrahmen 9 hier in höhenbeweglicher Aufhängung über einen Oberlenker Parallelogramm 30 und ein Unterlenker Parallelogramm 31 an dem Chassis 2. Auch hier ist mit Hilfe eines einstellbaren Oberlenkers 32 die verschwenkbar am Bürstenwalzengehäuse gelagerte Nachlaufwalze höhenvestellbar, so dass auch hier die Bürste 15 höhenverstellbar ist. Ein zweiter einstellbarer Oberlenker 35 erlaubt eine Justierung.

Die Figuren 3 und 4 zeigen grundsätzliche Anordnungen von Nachsaateinrichtungen 20, die in Fahrtrichtung den Einstechwerkzeugen 6 nachgeordnet vorgesehen sind, um das Bodenbearbeitungsgerät 1 einer weiteren Verwendung zuzuführen, nämlich der Ausbringung von Saatgut in den zu bearbeitenden Boden. Dabei müssen die Einstechwerkzeuge nicht wie bislang geschildert in die Bodentiefe gesehen sich erweiternde Drainageöffnungen erzeugen, es können auch Einstechwerkzeuge geringerer Einstechtiefe und/oder größere Anzahl - Nadelkissen pro Arm vorgesehen werden -, so dass im Vordergrund die Schaffung eines dichten Öffnungsfeldes zur Aufnahme von Saatgut steht.

In Figur 3 weist die Nachsaateinrichtung 20 einen Saatgutbehälter 22 auf, der in nicht näher dargestellter Weise an einem mit dem Chassis des Gerätes 1 schwenkbar verbundenen Hilfsrahmen 9 angeordnet ist, der sich zwischen den Einstechwerkzeugen 6 und einer Nachlaufwalze 12 befindet, eine der örtlichen und zeitlichen Verteilung dienende Ausbringeinrichtung 23 wird im vorliegenden Beispiel mit Hilfe einer Antriebseinrichtung 18 rotierend bewegt, die von der Nachlaufwalze 12 her angetrieben ist.

Dem Saatgutbehälter 22 in Fahrtrichtung nachgeordnet ist eine Bürste 24 vorgesehen, die über eine Parallelogrammlenkeranordnung 25 in stabiler Ausrichtung zum Boden gehalten und in feinfühliger Weise an den Verlauf des Bodens angepasst das ausgebrachte Saatgut erfasst und in die durch die Einstechwerkzeuge verursachten Öffnungen einbringt.

Figur 3a zeigt bei gleicher Arbeitsweise des Beispieles gemäß Figur 3 eine leicht modifizierte und detailgetreuere Ausführung.

Bei dem Beispiel gemäß Figur 4 ist der Saatgutbehälter 22 gegenüber dem Hilfsrahmen 9 über Parallelogrammlenker 27 als Baueinheit 26 höhenversetzbar gehalten, die auch die Bürste 24 umfasst. Die Baueinheit 26 ist über eine Trag- und Anpresswalze 21 am Boden abgestützt, die aus einer Reihe von senkrecht zur Fahrtrichtung koaxial dicht aufeinanderfolgenden Luftreifen bestehen kann, wodurch eine verhältnismäßig große Berührungsfläche zum Boden geschaffen wird, die den beabsichtigten Walzeneffekt zur Ebnung des Bodens und Eindrücken des Saatgutes bewirkt.

Figur 4a zeigt eine gegenüber dem Beispiel gemäß Figur 4 leicht modifizierte und detailgetreuer dargestellte Ausführung.

Figur 4b zeigt eine gleichwirkend wie die Beispiele nach den Figuren 4 und 4a arbeitende Nachsaateinrichtung, bei der anstelle des Hilfsrahmens 9 und der nachgeschalteten Parallellenker 27 hier ein Oberlenker Parallelogramm 30 und ein Unterlenker Parallelogramm 31 vorgesehen ist, das den Saatgutbehälter bzw. die Baueinheit 26 mit dem Chassis 2 entsprechend gelenkig verbindet, so dass die Nachsaateinrichtung über die abstützende Trag- und Anpresswalze gegenüber dem Chassis 2 höhenveränderlich gehalten ist. Der Saatgutbehälter ist über seitliche Stützräder 37 gehalten, und hinter diesen ist eine quer zur Fahrtrichtung verlaufende Zinkenreihe 38 vorgesehen, die nach Art von Striegeln arbeitet.

### Bezugsziffernliste

- 1: Bodenbearbeitungsgerät
- 2: Chassis
- 3: Stützwalze
- 4: Kurbeltrieb
- 5: Arme - chassisfest verschwenkbar gelagert
- 6: Einstechwerkzeug(e)
- 7: Striegel
- 8: Bodenniederhalter
- 9: Hilfsrahmen
- 10: Räumschild (Auffangwanne)
- 11: Schwenkhalterung
- 12: Nachlaufwalze
- 13: Federeinrichtung
- 14: Schürze
- 15: Bürstenwalze
- 16: Hebelanordnung
- 17: Verstellspindel
- 18: Antrieb von 23 (von Nachlaufwalze abgeleitet)
- 19: Hydraulischer Antrieb
- 20: Nachsaateinrichtung
- 21: Trag- und Anpresswalze (Luftwalze)
- 22: Saatgutbehälter
- 23: Ausbringeinrichtung
- 24: Bürste
- 25: Parallelogrammlenkeranordnung
- 26: Baueinheit
- 27: Parallelogrammlenker
- 30: Oberlenker Parallelogramm
- 31: Unterlenker Parallelogramm
- 32: Einstellbarer Oberlenker
- 33: seitliche Gleitkufen
- 34: Gummielement/Schürfleiste
- 35: verstellbarer Oberlenker
- 37: seitliche Stützräder
- 38: Zinkenreihe /Striegel

## Patentansprüche

1. Über eine Bodenfläche verfahrbar geführtes Bodenbearbeitungsgerät (1) mit im wesentlichen in einer Stoßrichtung angetrieben (4, 5) in den Boden einführbaren Einstechwerkzeugen (6) unter Durchstoßung der Bodenfläche, insbesondere Grasnabe, und Schaffung von Bodenöffnungen innerhalb des zu verarbeitenden Bodens
**gekennzeichnet durch**
wenigstens eine in Fahrtrichtung mitgeführte Nach- und/oder Parallelbehandlungseinrichtung (7; 8; 10; 12; 15; 20; 21; 24) für die Bodenöffnungen und/oder deren Durchstoßberandungen und/oder die Weiterbehandlung ausgeworfenen Bodens und/oder die Behandlung der Bodenfläche im Umfeld der Einstechöffnungen.

2. Gerät nach Anspruch 1,
**dadurch gekennzeichnet,**
**dass** die Nachbehandlungseinrichtung eine Nachsaatvorrichtung (20, 21, 24) umfasst, die vorzugsweise höhenversetzbar gehalten und insbesondere in vertikaler und in Vorwärtsfahrtrichtung verlaufender Ebene gegenüber dem Chassis (2) des Bodenbearbeitungsgerätes versetzbar angeordnet und bevorzugt über eine Trag- und Anpresswalze (12; 21) an dem zu bearbeitenden Boden abgestützt ist.

3. Gerät nach Anspruch 2,
**dadurch gekennzeichnet,**
**dass** die Nachsaatvorrichtung (20, 21, 24) einen Saatgutbehälter (22) aufweist, der an einem Hilfsrahmen (9) gehalten zwischen den Einstechwerkzeugen (6) und der Trag- und Anpresswalze (12; 21) angeordnet ist und der vorzugsweise mit einer Ausbringeinrichtung (23) ausgerüstet ist, die rotatorisch angetrieben sein kann, und zwar insbesondere durch eine getriebliche Verbindung (18) mit der Trag- und Anpresswalze (12; 21), wobei dem Saatgutbehälter (22) eine Bürste (24) zugeordnet sein kann, die - in Anordnung zwischen dem Saatgutbehälter (22) und der Trag- und Anpresswalze (12; 21) - das dem Saatgutbehälter (22) entrinnende Saatgut in die durch die Einstechwerkzeuge (6) geschaffenen Bodenöffnungen einbringt, welche Bürste (24) vorzugsweise gegenüber dem Saatgutbehälter (22) mittels einer Parallellenkeranordnung (25) in ihrer Versetzbewegung bevorzugt senkrecht zum Boden gleichbleibend ausgerichtet geführt ist.

4. Gerät nach Anspruch 2,
**dadurch gekennzeichnet,**
**dass** die Nachbehandlungseinrichtung eine Nachsaatvorrichtung (20) umfasst, die einen Saatgutbehälter (22) aufweist, der gegenüber einem an das Chassis (2) des Bodenbearbeitungsgerätes angeschlossenen Hilfsrahmen (9), insbesondere über eine Parallelogrammlenkereinrichtung (27), entsprechend zum Boden hin ausgerichtet richtungsstabil versetzbar verbunden ist, wobei der Saatgutbehälter (22) über eine Baueinheit (26) mit einer nachlaufenden "weichen" Bürste (24) zum Einstreichen des Saatgutes in die von den Stechwerkzeugen (6) geschaffene Vielzahl von Bodenöffnungen versehen sein kann, welche Baueinheit (26) mittels einer Nachlaufwalze (12) oder dergleichen (21) bodenorientiert abgestützt sein kann.

5. Gerät nach einem der Ansprüche 1 bis 4,
**dadurch gekennzeichnet,**
**dass** die Nachbehandlungseinrichtung eine Bürstenwalze (15) umfasst, die an einem Hilfsrahmen (9) gehalten ist und sich vorzugsweise über eine Nachlaufwalze (12; 21) höhenveränderlich gegenüber dem Boden einstellbar ist, bevorzugt dadurch, dass der Hilfsrahmen (9) an dem Chassis (2) des Gerätes (1) in vertikaler und in Vorwärtsfahrtrichtung verlaufender Ebene verschwenkbar gelagert ist.

6. Gerät nach einem der Anspruch 5,
**dadurch gekennzeichnet,**
**dass** die Bürstenwalze (15) über eine Hebelanordnung (16) gegenüber der am Boden angreifenden Nachlaufwalze (12; 21) hinsichtlich ihres Abstandes vom Boden einstellbar ist, beispielsweise mittels einer Verstellspindel (17), wobei der Antrieb der Bürstenwalze (15) von er Fahrbewegung, d.h. Rotation der Nachlaufwalze (12; 21), abgeleitet sein kann, bevorzugt aber über einen hydraulischen Antrieb (19) gespeist vom Zugwerkzeug des Bodenbearbeitungsgerätes (1) antreibbar ist, und zwar vorzugsweise hinsichtlich ihres Bodenangriffs in Vorwärtsfahrtrichtung des Gerätes entgegengesetzt rotierend.

7. Gerät nach einem der Ansprüche 1 bis 6,
**dadurch gekennzeichnet,**
**dass** die Nachbehandlungseinrichtung eine Räumschild (Auffangwanne) (10) für die Aufnahme von Erdkegeln, die im Zuge des Einstechvorganges von als Hohlkörper ausgebildeten Einstechwerkzeugen aus dem Erdreich ausgestochen und bei Herausziehen ausgeworfen werden, vorgesehen ist, wobei das Räumschild (Auffangwanne) (10) vorzugsweise an einem Hilfsrahmen (9) gehalten ist , der an dem Chassis (2) des Bodenbearbeitungsgerätes (1) in vertikaler und parallel zur Vorwärtsfahrtrichtung verlaufender Ebene verschwenkbar gehalten sein kann und sich bevorzugt über eine Nachlaufwalze (12; 21) an dem zu bearbeitenden Boden abstützt.

8. Gerät nach Anspruch 7,
**dadurch gekennzeichnet,**
**dass** das Räumschild (Auffangwanne) (10) und die Nachlaufwalze (12; 21) in Vorwärtsfahrtrichtung gesehen auf die Einstechwerkzeuge (6) folgend angeordnet sind, bevorzugt das Räumschild (Auffangwanne) (10) in Fahrtrichtung zwischen den Einstechwerkzeugen (6) und der Bodenwalze (12; 21), vorzugsweise über eine gesonderte, in gleicher Ebene verschwenkbare Halterung an dem Hilfsrahmen (9) angelenkt, und zwar gegebenenfalls unter Federbelastung.

9. Gerät nach einem der Ansprüche 1 bis 8,
**dadurch gekennzeichnet,**
**dass** die Nachbehandlungseinrichtung Bodenbearbeitungsvorrichtungen (7, 8) umfasst, die sich zwischen der bodenseitigen Abstützung (3) des Chassis (2) des Bodenbearbeitungsgerätes (1) und dessen Einstechwerkzeugen (6) in Vorwärtsfahrtrichtung gesehen befinden, und zwar insbesondere in Form von Vorrichtungen zur Aufrauung, Moos-Rasenfilzentfernung und dergleichen geeignete Striegel (Kratzwerkzeuge) (7).

10. Gerät nach einem der Ansprüche 1 bis 9,
**dadurch gekennzeichnet,**
**dass** die Nachbehandlungseinrichtung gegen den Boden insbesondere federnd angedrückte Bodenniederhalter (8) zur Verhinderung von Ausfransungen der Einstechöffnungen der Einstechwerkzeuge (6) bei Entfernen aus dem Boden umfasst.

11. Gerät nach einem der Ansprüche 1 bis 10,
**dadurch gekennzeichnet,**
**dass** die Nachbehandlungseinrichtungen - Nachsaateinrichtung (20, 21, 24), Bürstenwalze (15), Räumschild (10) - mittels eines Oberlenker Parallelogramms 30 und eines Unterlenker Parallelogramms 31 höhenversetzbar an dem Chassis (2) des Bodenbearbeitungsgerätes (1) gehalten sind.

12. Gerät nach Anspruch 11,
**dadurch gekennzeichnet,**
**dass** im Falle der höhenversetzbar gehaltenen Nachsaatvorrichtung in Fahrtrichtung vor deren Ausbringeinrichtung (23) eine oder mehrere am Boden eingreifende Zinkenreihen (38) und im Falle des höhenversetzbar gehaltenen Räumschildes (10) in dessen Bodenbereich eine gummiartige Schürfleiste (34) angeordnet ist.
